# EUROPÄISCHE PATENTSCHRIFT

(11) **EP 2 406 181 B1**
(45) Veröffentlichungstag und Bekanntmachung des Hinweises auf die Patenterteilung: **28.10.2020**
(21) Anmeldenummer: 10707905.5
(22) Anmeldetag: 10.03.2010
(51) Int. Cl.: C01B 32/80

(54) **VERFAHREN ZUR HERSTELLUNG VON PHOSGEN**
METHOD FOR PRODUCING PHOSGENE
PROCÉDÉ DE PRODUCTION DU PHOSGÈNE

(30) Priorität: 11.03.2009 EP 09154882; 06.04.2009 EP 09157407
(43) Veröffentlichungstag der Anmeldung: 18.01.2012
(73) Patentinhaber: BASF SE, 67056 Ludwigshafen am Rhein (DE)
(72) Erfinder: OLBERT, Gerhard, 69221 Dossenheim (DE); THIELE, Kai, B-2040 Antwerpen 4 (BE); KIM, Byoung Yeon, JunJam (KR); SCHELLING, Heiner, 67281 Kirchheim (DE)
(86) Internationale Anmeldenummer: PCT/EP2010/053011
(87) Internationale Veröffentlichungsnummer: WO 2010/103029

(56) Entgegenhaltungen:
- EP-A1- 0 983 792
- EP-A1- 2 067 742
- EP-A2- 1 932 828
- FR-A5- 2 109 186
- JP-A- 2003 154 235
- US-A- 4 231 959
- US-A1- 2004 181 090
- CSUROS Z; SOOS R; PETNEHAZY I; SZABO GT: "Investigation of the reaction conditions of phosgene production" PERIODICA POLYTECHNICA. CHEMICAL ENGINEERING, Bd. 14, 1970, Seiten 1-11, XP008122442

## Beschreibung

Die Erfindung betrifft ein Verfahren zur Herstellung von Phosgen durch Gasphasenreaktion von Kohlenmonoxid und Chlor in Gegenwart eines Feststoffkatalysators sowie ein Verfahren zur Herstellung von Phosgen unter Verwendung des Reaktors.

Phosgen ist ein wichtiger Hilfsstoff bei der Herstellung von Zwischen- und Endprodukten in nahezu allen Zweigen der Chemie. Das mengenmäßig größte Verwendungsgebiet ist die Herstellung von Diisocyanaten für die Polyurethanchemie, insbesondere von Toluylendiisocyanat, von 4,4-Diisocyanat-diphenylmethan und Hexamethylendiisocyanat.

Phosgen wird großtechnisch in einer katalytischen Gasphasenreaktion von Kohlenmonoxid und Chlor in Gegenwart eines Feststoffkatalysators, bevorzugt Aktivkohle hergestellt. Die Reaktion ist stark exotherm, die Bildungsenthalpie beträgt -107,6 kJ/mol. Die Reaktion wird in der Regel in einem Rohrbündelreaktor nach dem in Ullmanns Enzyklopädie der technischen Chemie, Vol. A 19, Seite 413 bis 414 beschriebenen Verfahren, hergestellt. Danach wird der körnige Katalysator, mit einer Korngröße im Bereich von 3 bis 5 mm, in Rohren mit einem Innendurchmesser zwischen 50 und 70 mm eingesetzt. Bei 40 bis 50°C springt die Reaktion an, die Temperatur steigt in den Rohren bis auf etwa 400°C und fällt dann schnell ab. Kohlenmonoxid wird in geringem Überschuss eingesetzt, um zu gewährleisten, dass das gesamte Chlor umgesetzt wird und um chlorfreies Phosgen zu erhalten. Die Reaktion wird in der Regel unter Druck durchgeführt, häufig bei 2 bis 6 bar Uberdruck.

Die US4231959 offenbart einen Prozess zur Herstellung von Phosgen aus Kohlenmonoxid und Chlor in einem Rohrbündelreaktor, mit Aktivkohle als Katalysator and Wasser als Kühlmittel. In dem Prozess wird das Kohlenmonoxid in stöchiometrischen Überschuss gegenüber Chlor zugeführt. Das hergestellte Phosgen wird durch Kondensation teilweise getrennt und wenigstens ein Teil des Abgasstroms (zum grössten Teil Kohlenmonoxid) wird recycled und als Ausgangstoff wiederverwendet. Ein Teil der Abgasstroms wird beseitigt und gereinigt.

Die DE 102 08 398 beschreibt einen Rohrbündelreaktor und ein Verfahren zur Herstellung von Phosgen, wonach die Korrosionsproblematik im Umlenkbereich des Wärmeträgers reduziert werden und somit eine erhöhte spezifische Querschnittsbelastung und damit eine höhere Kapazität ermöglicht wird.

Hierzu wird vorgeschlagen, einen Reaktor zur Herstellung von Phosgen durch Gasphasenreaktion von Kohlenmonoxid und Chlor in Gegenwart eines Feststoffkatalysators, mit einem Bündel von parallel zueinander, in Reaktorlängsrichtung angeordneten Kontaktrohren, die an ihren Enden in Rohrböden befestigt sind, mit je einer Haube an beiden Enden des Reaktors, sowie mit senkrecht zur Reaktorlängsrichtung im Zwischenraum zwischen den Kontaktrohren angeordneten Umlenkblechen, die alternierend einander gegenüberliegende Durchtrittsöffnungen an der Reaktorinnenwand freilassen, wobei die Kontaktrohre mit dem Feststoffkatalysator befüllt sind, das gasförmige Reaktionsgemisch von einem Reaktorende über eine Haube durch die Kontaktrohre geleitet und vom entgegengesetzten Reaktorende über die zweite Haube abgezogen und durch den Zwischenraum um die Kontaktrohre ein flüssiges Wärmetauschmittel geleitet wird, so auszubilden, dass der Reaktor im Bereich der Durchtrittsöffnungen unberohrt ist, wobei unter Durchtrittsöffnung der Bereich zwischen dem freien Ende eines Umlenkbleches und der Reaktorinnenwand verstanden wird.

Phosgenreaktoren werden auf vollständigen Chlorumsatz gefahren, da die Spezifikationsanforderungen für den nachfolgenden Einsatz, insbesondere zur Herstellung von Isocyanaten, praktisch chlorfreies Phosgen, mit Chlorrestgehalten von maximal 1000 ppm, oder auch maximal 100 ppm, oder auch maximal 10 ppm, vorschreiben, insbesondere da Chlorreste die Farbzahl der Isocyanate negativ beeinflussen.

Darüber hinaus verschlechtert sich bei längerem, über einige Stunden hinausgehendem Betrieb des Phosgenreaktors mit stöchiometrischem Chlorüberschuss die Aktivität des Aktivkohlekatalysators irreversibel.

Es muss daher stets ein Kohlenmonoxidüberschuss im Feedstrom zum Phosgenreaktor sichergestellt sein. In der Regel wird mit einem stöchiometrischen Kohlenmonoxidüberschuss im Bereich von 1 bis 10 %, bevorzugt von 2,5 bis 4 %, je nach Phosgenlast des Reaktors, gefahren. Auch bei unveränderten Durchflussmengen der beiden Eduktströme Kohlenmonoxid und Chlor kann es jedoch zeitweise zu unerwünschten Betriebszuständen kommen bei denen ein Kohlenmonoxidüberschuss nicht mehr gewährleistet ist, weil die Qualität des Kohlenmonoxid-Feedstromes, insbesondere der Anteil an Inerten, besonders Stickstoff, häufig im Bereich von 0,5 bis 4 Vol.-%, bezogen auf das Gesamtvolumen des Kohlenmonoxidstromes, schwankt.

Die an sich nahe liegende Lösung, mit einem so hohen stöchiometrischen Kohlenmonoxidüberschuss zu fahren, dass derartige Schwankungen in der Zusammensetzung des Kohlenmonoxideduktstromes für den Kohlenmonoxidüberschuss im Feedstrom zum Reaktor unerheblich sind, verbieten sich jedoch aus Wirtschaftlichkeitsüberlegungen.

Es war daher Aufgabe der Erfindung, ein Verfahren zur Herstellung von Phosgen in einem Rohrbündelreaktor zur Verfügung zu stellen, wonach sichergestellt ist, dass chlorfreies, den Spezifikationsanforderungen entsprechendes Wertprodukt Phosgen erhalten wird, und dabei gleichzeitig, in einfacher Weise, sichergestellt ist, dass der Kohlenmonoxidverbrauch minimal ist.

Die Lösung besteht in einem Verfahren zur Herstellung von Phosgen durch Umsetzung eines Feedstromes erhalten durch Zusammenführen und Mischen eines ChlorEinsatzstromes und eines Kohlenmonoxid-Einsatzstromes, wobei das Kohlenmonoxid in stöchiometrischem Überschuss gegenüber Chlor zugeführt wird, an mit Aktivkohleschüttungen befüllten Kontaktrohren eines Reaktors mit einem Bündel von Kontaktrohren,
unter Erhalt eines Produktgasgemisches,
das in einen flüssigen, Phosgen enthaltenden Produktstrom, sowie einen Abgasstrom, enthaltend Kohlenmonoxid aufgetrennt wird, der über ein Druckhalteventil ausgeschleust wird, und wobei die Umsetzung des Feedstromes im Reaktor sowie die Auftrennung des Produktgasgemisches unter einem Druck im Bereich von 2,0 bis 6,0 bar Überdruck durchgeführt werden, das dadurch gekennzeichnet ist, dass
der Kohlenmonoxidüberschuss im Feedstrom zum Reaktor geregelt wird, indem im Abgasstrom kontinuierlich die Durchflussmenge und die Konzentration an Kohlenmonoxid gemessen wird, hieraus in Verbindung mit den kontinuierlich erfassten Messwerten für die Durchflussmenge des Kohlenmonoxid-Einsatzstromes, die Durchflussmenge und die Chlorkonzentration des Chlor-Einsatzstromes, der Istwert für den Kohlenmonoxidüberschuss im Feedstroms zum Reaktor berechnet und an den Sollwert für den Kohlenmonoxidüberschuss im Feedstrom zum Reaktor angeglichen wird, indem die Durchflussmenge des Kohlenmonoxid-Einsatzstromes und/oder die Durchflussmenge des Chlor-Einsatzstromes angepasst wird.

Es wurde gefunden, dass es möglich ist, den Kohlenmonoxidüberschuss im Feedstrom dergestalt zu regeln und einzustellen, dass stets gewährleistet ist, dass ein chlorfreies Wertprodukt Phosgen erhalten wird, und dabei gleichzeitig der Kohlenmonoxidverbrauch minimal ist.

Hierzu werden der Mengenstrom und die Chlorkonzentration des Chloreinsatzstromes sowie der Mengenstrom des Kohlenmonoxid-Einsatzstromes kontinuierlich erfasst.

Die direkte Messung der Qualität, das heißt der Kohlenmonoxidkonzentration des Kohlenmonoxid-Einsatzstromes wäre jedoch, aufgrund des hohen Betriebsdruckes, aufwändig zu realisieren, aufgrund der großen Durchflussmenge, mit sehr geringen Anteilen an Inerten, unpräzise und sicherheitstechnisch, wegen der gesundheitsgefährdenden Gase, insbesondere Kohlenmonoxid, problematisch.

Es wurde demgegenüber gefunden, dass es möglich ist, den Istwert des Kohlenmonoxidüberschusses im Eduktstrom aus anderen, messtechnisch einfach zugänglichen Daten zu errechnen, und zwar aus der Menge und der Zusammensetzung des die Anlage verlassenden Abgasstromes in Verbindung mit der Menge und Zusammensetzung des Chlor-Einsatzstromes (die Zusammensetzung des Chlor-Einsatzstromes ändert sich erfahrungsgemäß wenig) sowie der Menge des Kohlenmonoxid-Einsatzstromes, jeweils für den entsprechenden Betriebszustand.

Der Sollwert für den Kohlenmonoxidüberschuss im Feedstrom zum Reaktor wird zustandsabhängig, das heißt unter Berücksichtigung der Geometrie der Aktivkohleschüttungen, der Phosgenlast und des Betriebsdruckes auf der Grundlage eines reaktionskinetischen Modells berechnet, das durch experimentelle Messwerte validiert ist.

Vorliegend wird somit die zu regelnde Größe, der Kohlenmonoxidüberschuss im Feedstrom zum Reaktor kontinuierlich errechnet, mit dem für den entsprechenden Betriebszustand errechneten oder experimentell bestimmten Sollwert verglichen und im Sinne einer Angleichung an den Sollwert, über die Stellgröße, den Mengenstrom des Kohlenmonoxid-Einsatzstromes, beeinflusst.

In einer bevorzugten Ausführungsform werden die auf der Grundlage eines reaktionskinetischen Modelles berechneten Sollwerte für den Kohlenmonoxidüberschuss im Feedstrom auf Plausibilität geprüft, indem experimentell in einem Pilotreaktor mit einem einzigen Kontaktrohr, das dieselben Abmessungen wie die Kontaktrohre des Reaktors aufweist, unter denselben Betriebsbedingungen wie im Reaktor, wobei das Kontaktrohr mit Aktivkohlekatalysator auf unterschiedliche Füllhöhen befüllt wird und wobei für jede Füllhöhe ein Phosgen-Lastspektrum durchgefahren wird, über eine angeschlossene Chlormessung bestimmt wird, bei welchem Kohlenmonoxidüberschuss der Chlordurchbruch stattfindet.

Vorteilhaft werden die Istwerte und die Sollwerte für den Kohlenmonoxidüberschuss im Feedstrom zum Reaktor im Prozessleitsystem für das Verfahren angezeigt. Dadurch können die Istwerte automatisch oder manuell an die Sollwerte angeglichen werden.

In einer bevorzugten Ausführungsform wird der spezifische Kohlenmonoxidverbrauch weiter gesenkt, indem aus dem Produktgasgemisch aus dem Reaktor das Wertprodukt Phosgen abgetrennt und aus dem verbleibenden Gasstrom ein Teilstrom abgetrennt wird, der als Recyclestrom vor den Phosgenreaktor zurückgeführt wird. Der Recylestrom weist häufig noch eine Kohlenmonoxidkonzentration im Bereich von 20 bis 60 Gew.-%, bevorzugt 30 bis 50 Gew.-%, bezogen auf das Gesamtgewicht des Recyclestromes, auf.

Der Teilstrom, der als Recyclestrom vor den Phosgenreaktor zurückgeführt wird, kann bevorzugt 40 bis 95 Gew.-%, bevorzugt 75 bis 90 Gew.-% des Gasstromes betragen, der aus dem Produktgasgemisch nach Abtrennen des flüssigen Phosgens verbleibt.

Die Rückführung des Recyclestromes vor den Phosgenreaktor erfolgt vorteilhaft über eine Treibstrahldüse, die durch den Vordruck eines der beiden Eduktströme, des Kohlenmonoxid-Einsatzstromes oder des Chlor-Einsatzstromes, angetrieben wird. Bevorzugt ist die Treibstrahldüse und weiter bevorzugt auch die Leitung für die Rückführung aus einem gegen Chlor und Phosgen korrosionsbeständigen Stahl gebildet.

Aus dem Produktgasgemisch nach dem Phosgenreaktor wird flüssiges Phosgen, bevorzugt zweistufig, durch Kondensation, abgetrennt. Der verbleibende Gasstrom wird bevorzugt in einen Teilstrom aufgetrennt, der als Recyclestrom vor den Phosgenreaktor zurückgeführt wird und einen Reststrom, woraus Phosgen in einer Waschkolonne ausgewaschen wird, und wobei ein Abgasstrom verbleibt, der aus der Anlage ausgeschleust wird. Der Phosgenstrom aus der Waschkolonne kann mit dem Produktstrom aus der bevorzugt zweistufigen Kondensation vereinigt werden.

In der Verfahrensvariante mit Rückführung eines Teilstromes vor den Phosgenreaktor wird die Durchflussmenge des Recyclestromes kontinuierlich gemessen und die Kohlenmonoxidkonzentration des Recyclestromes aus den Messdaten für die Durchflussmenge und die Kohlenmonoxidkonzentration des Abgasstromes in Verbindung mit den Betriebsbedingungen Temperatur und Druck der Kondensation kontinuierlich berechnet. Diese Daten, das heißt die Durchflussmenge und die Kohlenmonoxidkonzentration des Recyclestromes werden kontinuierlich in die Berechnung des Istwertes für den Kohlenmonoxidüberschuss im Feedstrom zum Reaktor einbezogen.

In einer Ausführungsform wird die Durchflussmenge des Abgasstromes vor dem Druckhalteventil zum Ausschleusen des Abgasstromes aus der Anlage, und die Kohlenmonoxidkonzentration desselben nach dem Druckhalteventil, zum Beispiel IRspektrometrisch, gemessen.

Die Kohlenmonoxidkonzentrationsmessung im Abgasstrom ist gegenüber einer Messung der Kohlenmonoxidkonzentration im Feedstrom zum Phosgenreaktor wesentlich einfacher und präziser; insbesondere ist der Mengenstrom wesentlich geringer und es ist keine Messung unter erhöhtem Druck erforderlich, insbesondere keine druckresistenten Mess-Küvetten.

In einer weiteren Ausführungsform werden die Durchflussmenge des Abgasstromes sowie die Konzentration an Kohlenmonoxid im Abgasstrom kontinuierlich nach dem Druckhalteventil gemessen.

Der Reaktor zur Umsetzung von Kohlenmonoxid und Chlor zu Phosgen kann bevorzugt einen Hauptreaktor und einen Nachreaktor umfassen. Insbesondere kann im Nachreaktor bis zu 10 % Restumsatz durchgeführt werden, und der Nachreaktor kann adiabat oder gekühlt betrieben werden.

Vorteilhaft können für die Bestimmung der Kohlenmonoxidkonzentration im Abgas nach dem Druckhalteventil zwei parallele Messeinrichtungen vorgesehen sein, die zeitlich versetzt betrieben werden, so dass keine Ausfallzeiten anfallen.

Bevorzugt kann zusätzlich der Chlorgehalt des Produktgasgemisches nach dem Phosgenreaktor in zeitlichen Abständen, oder kontinuierlich gemessen werden.

Der Kohlenmonoxidüberschuss im Feedstrom kann auch auf Grundlage dieser Chlorgehaltsmessung des Produktgasgemisches nach dem Phosgenreaktor grob eingestellt werden; diese Art der Chlormessung und der Reaktorregelung ist jedoch wenig zuverlässig.

Die Erfindung wird im Folgenden anhand einer Zeichnung näher erläutert.

Es zeigen im Einzelnen:
- Figur 1: eine bevorzugte Ausführungsform einer schematischen Anlage zur Durchführung des erfindungsgemäßen Verfahrens, und
- Figur 2: ein Betreiberdiagramm mit Parameterschar für die Sollwerte des Kohlenmonoxidüberschusses in Abhängigkeit von der Füllhöhe der Kontaktrohre und der Phosgenlast.

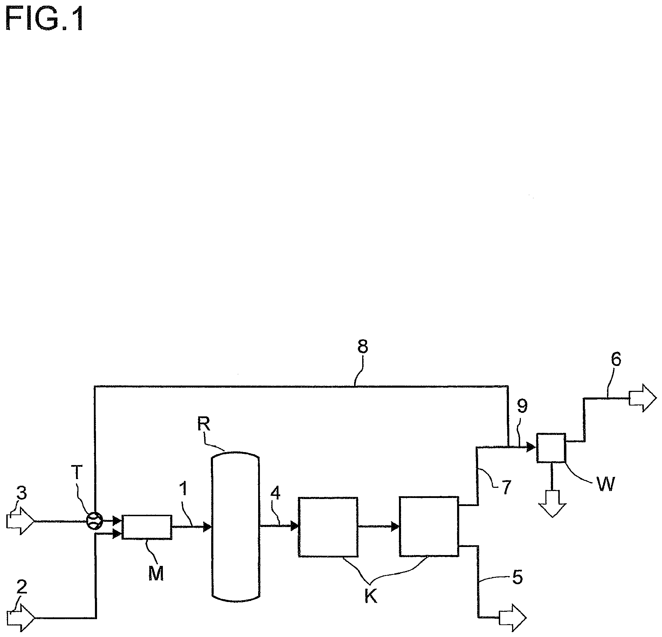

Die schematische Darstellung in Figur 1 zeigt einen Phosgenreaktor R, dem ein Chlor-Einsatzstrom, Bezugsziffer 2, und ein Kohlenmonoxid-Einsatzstrom, Bezugsziffer 3 nach Zusammenführen und Mischen in einem statischen Mischer M, als Feedstrom 1 zugeführt werden.

Das Produktgasgemisch 4 aus dem Reaktor R wird in der in der Figur dargestellten bevorzugten Ausführungsform zwei hintereinander geschalteten Kondensatoren K zugeführt. Hieraus wird flüssiges Phosgen als Produktstrom 5 abgetrennt, unter Verbleib eines Gasstromes 7, der in einen Recyclestrom 8 und einen Reststrom 9 aufgeteilt wird. Der Recyclestrom 8 wird über eine Treibstrahldüse T, die beispielsweise, in der in der Figur dargestellten Ausführungsform über den Vordruck des Kohlenmonoxid-Einsatzstromes 3 angetrieben wird, vor den Reaktor R recycliert. Der Reststrom 9 wird einer Waschkolonne W zugeführt, worin mit einem geeigneten Lösungsmittel, beispielsweise Monochlorbenzol, weiteres Wertprodukt Phosgen ausgewaschen wird, unter Verbleib eines Abgasstromes 6, der aus der Anlage ausgeschleust wird.

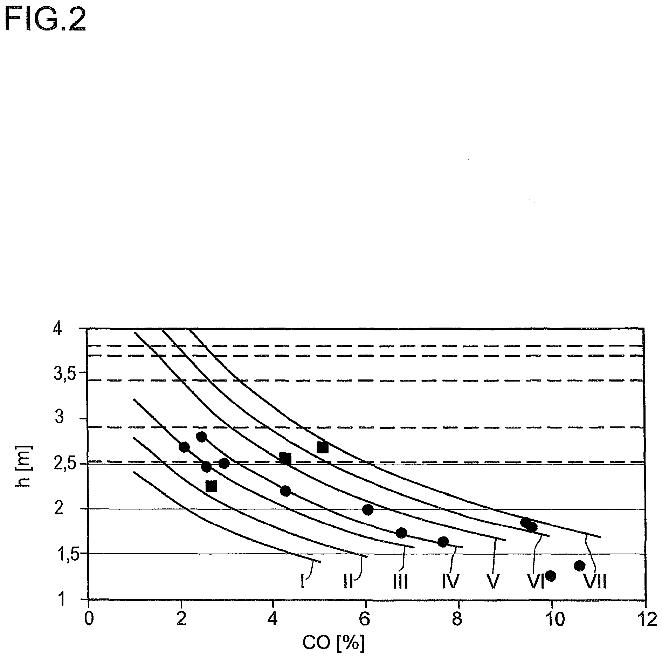

Figur 2 zeigt ein Betreiberdiagramm mit Parameterschar, das die Sollwerte für den Kohlenmonoxidüberschuss im Feedstrom in Abhängigkeit von den Betriebsbedingungen Katalysatorfüllhöhe in den Kontaktrohren, Phosgenlast, Druck und Temperatur, darstellt.

Der Kohlenmonoxidüberschuss, CO, im Einsatzstrom zum Phosgenreaktor ist auf der Abszisse in Prozenten, und die Füllhöhe der Kontaktrohre, h, in Metern, auf der Ordinate angegeben.

Die Kurven I bis VII bezeichnen unterschiedliche Lastzustände, jeweils angegeben in kg Phosgen/m²/s: Kurve I entspricht einer Phosgenlast von 1,4, Kurve II einer Phosgenlast von 1,6, Kurve III einer Phosgenlast von 1,8, Kurve IV einer Phosgenlast von 2,0, Kurve V einer Phosgenlast von 2,2, Kurve VI einer Phosgenlast von 2,4 und Kurve VII einer Phosgenlast von 2,6.

Das in Figur 2 dargestellte Betreiberdiagramm wurde experimentell durch Versuche in folgender Weise erstellt:
Ausgegangen wird von einem in der Phosgensynthese üblichen Kontaktrohr aus Duplex-Stahl 1.4462 mit einem Außendurchmesser von 44,5 mm, einer Wandstärke von 2,6 mm und einer Länge von 5 m. Dieses wird mit Aktivkohle-Katalysator auf unterschiedliche Füllhöhen befüllt, beginnend mit einer Füllhöhe von 1,5 m in 0,25 m-Schritten bis zu einer maximalen Füllhöhe von 4,5 m.

Für jede Füllhöhe wird das Phosgen-Lastspektrum von 1,4 bis 2,6 kg Phosgen/m²/s, in 0,2 kg Phosgen/m²/s-Schritten durchgefahren und über eine angeschlossene Chlormessung bestimmt, bei welchem Kohlenmonoxid-Überschuss der Chlor-Durchbruch stattfindet.

Nach dem erfindungsgemäßen Verfahren kann wesentlich schärfer an die Grenze, den Sollwert für den Kohlenmonoxidüberschuss für den jeweiligen Betriebszustand des Reaktors herangefahren werden. Dadurch können, bei gleichzeitig minimalem Kohlenmonoxidverbrauch, Ausfallzeiten der Anlage vermieden werden, die mit erheblichem Aufwand für den Katalysatorwechsel - der Katalysatorwechsel, das heißt Entleeren der Kontaktrohre, Reinigen, Prüfen, neu Befüllen, den Katalysator phosgenfrei machen und Trocknen erfordert in der Regel 12 bis 17 Arbeitstage. Nach dem erfindungsgemäßen Verfahren können die Laufzeiten der Kontaktrohre so angepasst werden, dass sie in die gesetzlich vorgeschriebenen Wartungsintervalle, in der Regel 2 bis 5 Jahren fallen.

Diese experimentell ermittelten Sollwerte wurden zum Abgleich des reaktionskinetischen Modells genutzt.

## Patentansprüche

1. Verfahren zur Herstellung von Phosgen durch Umsetzung eines Feedstromes (1) erhalten durch Zusammenführen und Mischen eines Chlor-Einsatzstromes (2) und eines Kohlenmonoxid-Einsatzstromes (3), wobei das Kohlenmonoxid in stöchiometrischem Überschuss gegenüber Chlor zugeführt wird, an mit Aktivkohleschüttungen befüllten Kontaktrohren eines Reaktors R mit einem Bündel von Kontaktrohren,
unter Erhalt eines Produktgasgemisches (4),
das in einen flüssigen, Phosgen enthaltenden Produktstrom (5), sowie einen Abgasstrom (6), enthaltend Kohlenmonoxid aufgetrennt wird, der über ein Druckhalteventil ausgeschleust wird, und wobei die Umsetzung des Feedstromes (1) im Reaktor R sowie die Auftrennung des Produktgasgemisches (4) unter einem Druck im Bereich von 2,0 bis 6,0 bar Überdruck durchgeführt werden, **dadurch gekennzeichnet, dass**
der Kohlenmonoxidüberschuss im Feedstrom (1) zum Reaktor R geregelt wird, indem im Abgasstrom (6) kontinuierlich die Durchflussmenge und die Konzentration an Kohlenmonoxid gemessen wird, hieraus in Verbindung mit den kontinuierlich erfassten Messwerten für die Durchflussmenge des Kohlenmonoxid-Einsatzstromes (3), die Durchflussmenge und die Chlorkonzentration des Chlor-Einsatzstromes (2), der Istwert für den Kohlenmonoxidüberschuss im Feedstroms (1) zum Reaktor R berechnet und an den Sollwert für den Kohlenmonoxidüberschuss im Feedstrom (1) zum Reaktor R angeglichen wird, indem die Durchflussmenge des Kohlenmonoxid-Einsatzstromes (3) und/oder die Durchflussmenge des Chlor-Einsatzstromes (2) angepasst wird, wobei der der Sollwert für den Kohlenmonoxidüberschuss im Feedstrom (1) zum Reaktor R für den jeweils aktuellen Betriebszustand des Reaktors R, insbesondere die Geometrie der Aktivkohleschüttungen, die Phosgenlast und den Betriebsdruck auf der Grundlage eines reaktionskinetischen Modelles berechnet wird und die Istwerte und die Sollwerte für den Kohlenmonoxidüberschuss im Feedstrom (1) zum Reaktor R im Prozessleitsystem für das Verfahren angezeigt werden.

2. Verfahren nach Anspruch 1, **dadurch gekennzeichnet, dass** die auf der Grundlage eines reaktionskinetischen Modelles berechneten Sollwerte für den Kohlenmonoxidüberschuss im Feedstrom (1) zum Reaktor R auf Plausibilität geprüft werden, indem experimentell in einem Pilotreaktor mit einem einzigen Kontaktrohr, das dieselben Abmessungen wie die Kontaktrohre des Reaktors R aufweist, unter denselben Betriebsbedingungen wie im Reaktor R, wobei das Kontaktrohr mit Aktivkohlekatalysator auf unterschiedliche Füllhöhen befüllt wird und wobei für jede Füllhöhe ein Phosgen-Lastspektrum durchgefahren wird, über eine angeschlossene Chlormessung bestimmt wird, bei welchem Kohlenmonoxidüberschuss der Chlordurchbruch stattfindet.

3. Verfahren nach einem der Ansprüche 1 bis 2, **dadurch gekennzeichnet, dass** aus dem Produktgasgemisch (4) der flüssige, Phosgen enthaltende Produktstrom (5) durch Kondensation abgetrennt wird, wobei ein Gasstrom (7) verbleibt, der in einen Teilstrom aufgeteilt wird, der als Recyclestrom (8) vor den Reaktor R zurückgeleitet wird und einen Reststrom (9), woraus Phosgen in einer Waschkolonne W ausgewaschen wird, wobei aus der Waschkolonne W der Abgasstrom (6) ausgeschleust wird, und wobei die Durchflussmenge des Recyclestromes (8) kontinuierlich gemessen und die Kohlenmonoxidkonzentration des Recyclestromes (8) aus den Messdaten für die Durchflussmenge und die Kohlenmonoxidkonzentration des Abgasstromes (6) in Verbindung mit den Betriebsbedingungen Temperatur und Druck der Kondensation kontinuierlich berechnet wird, und wobei die Durchflussmenge und die Kohlenmonoxidkonzentration des Recyclestromes (8) kontinuierlich in die Berechnung des Istwertes für den Kohlenmonoxdüberschuss im Feedstrom (1) zum Reaktor R einbezogen werden.

4. Verfahren nach einem der Ansprüche 1 bis 3, **dadurch gekennzeichnet, dass** die Durchflussmenge des Abgasstromes (6) vor dem Druckhalteventil und die Konzentration an Kohlenmonoxid im Abgasstrom (6) nach dem Druckhalteventil gemessen wird.

5. Verfahren nach einem der Ansprüche 1 bis 4, **dadurch gekennzeichnet, dass** die Durchflussmenge des Abgasstroms (6) und die Konzentration an Kohlenmonoxid im Abgasstrom (6) kontinuierlich nach dem Druckhalteventil gemessen werden.

6. Verfahren nach einem der Ansprüche 1 bis 5, **dadurch gekennzeichnet, dass** die Abtrennung des flüssigen Phosgenstromes (5) durch Kondensation zweistufig erfolgt.

7. Verfahren nach einem der Ansprüche 3 bis 6, **dadurch gekennzeichnet, dass** der Recyclestrom (8) eine Kohlenmonoxidkonzentration im Bereich von 20 bis 60 Gew.-%, bevorzugt von 30 bis 40 Gew.-%, bezogen auf das Gesamtgewicht des Recyclestromes (8), aufweist.

8. Verfahren nach einem der Ansprüche 3 bis 7, **dadurch gekennzeichnet, dass** der Recyclestrom (8) vor den Reaktor R über eine Treibstrahldüse T zurückgeführt wird, die durch den Kohlenmonoxid-Einsatzstrom (3) oder den Chlor-Einsatzstrom (2) angetrieben wird.

9. Verfahren nach einem der Ansprüche 1 bis 8, **dadurch gekennzeichnet, dass** der Reaktor R für die Umsetzung von Kohlenmonoxid und Chlor zu Phosgen einen Hauptreaktor und einen Nachreaktor umfasst.

10. Verfahren nach Anspruch 9, **dadurch gekennzeichnet, dass** im Nachreaktor bis zu 10 % Restumsatz durchgeführt wird, und dass der Nachreaktor adiabat oder gekühlt betrieben wird.

11. Verfahren nach einem der Ansprüche 1 bis 10, **dadurch gekennzeichnet, dass** zwei parallele Messeinrichtungen für die Bestimmung der Kohlenmonoxidkonzentration im Abgas nach dem Druckhalteventil vorgesehen sind, die zeitlich versetzt betrieben werden.

12. Verfahren nach einem der Ansprüche 1 bis 11, **dadurch gekennzeichnet, dass** der Chlorgehalt des Produktgasgemisches (4) nach dem Reaktor R gemessen wird.

## Claims

1. A process for preparing phosgene by reaction of a feed stream (1) obtained by combining and mixing a chlorine feed stream (2) and a carbon monoxide feed stream (3), with the carbon monoxide being introduced in a stoichiometric excess over chlorine, in catalyst tubes filled with beds of activated carbon in a reactor R having a bundle of catalyst tubes,
to give a product gas mixture (4)
which is separated into a liquid, phosgene-comprising product stream (5) and an offgas stream (6) comprising carbon monoxide which is discharged via a pressure-regulating valve, where the reaction of the feed stream (1) in the reactor R and the separation of the product gas mixture (4) are carried out under a pressure in the range from 2.0 to 6.0 bar gauge pressure, wherein
the excess of carbon monoxide in the feed stream (1) to the reactor R is regulated by continuously measuring the flow and the concentration of carbon monoxide in the offgas stream (6), calculating the actual value of the excess of carbon monoxide in the feed stream (1) to the reactor R from these measurements in combination with the continuously measured values for the flow of the carbon monoxide feed stream (3) and the flow of and the chlorine concentration in the chlorine feed stream (2) and matching this to the intended value of the excess of carbon monoxide in the feed stream (1) to the reactor R by adapting the flow of the carbon monoxide feed stream (3) and/or the flow of the chlorine feed stream (2), where the intended value of the excess of carbon monoxide in the feed stream (1) to the reactor R is calculated for the prevailing operating state of the reactor R, in particular the geometry of the activated carbon beds, the phosgene load and the operating pressure on the basis of a reaction kinetic model and the actual values and the intended values for the excess of carbon monoxide in the feed stream (1) to the reactor R are indicated in the process control system for the process.

2. The process according to claim 1, wherein the intended values of the excess of carbon monoxide in the feed stream (1) to the reactor R which have been calculated on the basis of a reaction kinetic model are tested for plausibility by experimentally determining the excess of carbon monoxide at which chlorine breakthrough takes place in a pilot reactor having a single catalyst tube which has the same dimensions as the catalyst tubes of the reactor R under the same operating conditions as in the reactor R, with the catalyst tube being filled to various fill heights with activated carbon catalyst and a phosgene load spectrum being passed through for each fill height, by means of a connected chlorine measurement.

3. The process according to either of claims 1 and 2, wherein the liquid, phosgene-comprising product stream (5) is separated off from the product gas mixture (4) by condensation, leaving a gas stream (7) which is divided into a substream which is recirculated as recycle stream (8) to a point upstream of the reactor R and a residual stream (9) from which phosgene is scrubbed out in a scrubbing column W, with the offgas stream (6) from the scrubbing column W being discharged and the flow of the recycle stream (8) being measured continuously and the carbon monoxide concentration of the recycle stream (8) being calculated continuously from the measured data for the flow and the carbon monoxide concentration of the offgas stream (6) in combination with the operating conditions temperature and pressure of the condensation and the flow and the carbon monoxide concentration of the recycle stream (8) being continuously employed in the calculation of the actual value of the excess of carbon monoxide in the feed stream (1) to the reactor R.

4. The process according to any of claims 1 to 3, wherein the flow of the offgas stream (6) is measured upstream of the pressure-regulating valve and the concentration of carbon monoxide in the offgas stream (6) is measured downstream of the pressure-regulating valve.

5. The process according to any of claims 1 to 4, wherein the flow of the offgas stream (6) and the concentration of carbon monoxide in the offgas stream (6) are measured continuously downstream of the pressure-regulating valve.

6. The process according to any of claims 1 to 5, wherein the separation of the liquid phosgene stream (5) by condensation is carried out in two stages.

7. The process according to any of claims 3 to 6, wherein the recycle stream (8) has a carbon monoxide concentration in the range from 20 to 60% by weight, preferably from 30 to 40% by weight, based on the total weight of the recycle stream (8) .

8. The process according to any of claims 3 to 7, wherein the recycle stream (8) is recirculated to a point upstream of the reactor R via a driving jet nozzle T which is driven by the carbon monoxide feed stream (3) or the chlorine feed stream (2).

9. The process according to any of claims 1 to 8, wherein the reactor R for the reaction of carbon monoxide and chlorine to form phosgene comprises a main reactor and an after-reactor.

10. The process according to claim 9, wherein the reaction in the after-reactor is carried out to a residual conversion of 10% and the after-reactor is operated adiabatically or with cooling.

11. The process according to any of claims 1 to 10, wherein two parallel measurement facilities which are operated with a time offset are provided downstream of the pressure-regulating valve for the determination of the carbon monoxide concentration in the offgas.

12. The process according to any of claims 1 to 11, wherein the chlorine content of the product gas mixture (4) is measured downstream of the reactor R.

## Revendications

1. Procédé de fabrication de phosgène par mise en réaction d'un courant d'alimentation (1) obtenu par réunion et mélange d'un courant d'entrée de chlore (2) et d'un courant d'entrée de monoxyde de carbone (3), le monoxyde de carbone étant introduit en excès stœchiométrique par rapport au chlore, au niveau de tubes de contact, remplis avec des garnissages de charbon actif, d'un réacteur R comprenant un faisceau de tubes de contact,
avec obtention d'un mélange gazeux de produits (4),
qui est séparé en un courant de produits liquide contenant du phosgène (5), ainsi qu'un courant de gaz d'échappement (6), contenant du monoxyde de carbone, qui est évacué par le biais d'une soupape de maintien de pression, et la réaction du courant d'alimentation (1) dans le réacteur R, ainsi que la séparation du mélange gazeux de produits (4) étant réalisées sous une pression dans la plage allant de 2,0 à 6,0 bar de surpression, **caractérisé en ce que**
l'excès de monoxyde de carbone dans le courant d'alimentation (1) du réacteur R est réglé en mesurant en continu le débit et la concentration de monoxyde de carbone dans le courant de gaz d'échappement (6), en calculant à partir de ceux-ci, en connexion avec les valeurs mesurées enregistrées en continu pour le débit du courant d'entrée de monoxyde de carbone (3), le débit et la concentration en chlore du courant d'entrée de chlore (2), la valeur réelle pour l'excès de monoxyde de carbone dans le courant d'alimentation (1) du réacteur R et en la comparant à la valeur de consigne pour l'excès de monoxyde de carbone dans le courant d'alimentation (1) du réacteur R, en adaptant le débit du courant d'entrée de monoxyde de carbone (3) et/ou le débit du courant d'entrée de chlore (2), la valeur de consigne pour l'excès de monoxyde de carbone dans le courant d'alimentation (1) du réacteur R pour l'état d'exploitation actuel respectif du réacteur R, notamment la géométrie des garnissages de charbon actif, la charge en phosgène et la pression d'exploitation, étant calculée sur la base d'un modèle de cinétique de réaction, et les valeurs réelles et les valeurs de consigne pour l'excès de monoxyde de carbone dans le courant d'alimentation (1) du réacteur R étant affichées dans le système de pilotage de processus pour le procédé.

2. Procédé selon la revendication 1, **caractérisé en ce que** les valeurs de consigne pour l'excès de monoxyde de carbone dans le courant d'alimentation (1) du réacteur R calculées sur la base d'un modèle de cinétique de réaction sont évaluées en termes de plausibilité en déterminant expérimentalement dans un réacteur pilote comprenant un tube de contact unique, qui présente les mêmes dimensions que les tubes de contact du réacteur R, dans les mêmes conditions d'exploitation que dans le réacteur R, le tube de contact étant rempli avec un catalyseur de charbon actif à différentes hauteurs de remplissage et, pour chaque hauteur de remplissage, un spectre de charges de phosgène étant parcouru, par une mesure de chlore raccordée, à quel excès de monoxyde de carbone la percée de chlore a lieu.

3. Procédé selon l'une quelconque des revendications 1 à 2, **caractérisé en ce que** le courant de produits liquide contenant du phosgène (5) est séparé du mélange gazeux de produits (4) par condensation, un courant gazeux (7) restant, qui est divisé en un courant partiel, qui est réintroduit avant le réacteur R en tant que courant de recyclage (8), et un courant résiduel (9), à partir duquel du phosgène est lavé dans une colonne de lavage W, le courant de gaz d'échappement (6) étant évacué à partir de la colonne de lavage W, et le débit du courant de recyclage (8) étant mesuré en continu et la concentration en monoxyde de carbone du courant de recyclage (8) étant calculée en continu à partir des données de mesure pour le débit et la concentration en monoxyde de carbone du courant de gaz d'échappement (6) en connexion avec les conditions d'exploitation température et pression de la condensation, et le débit et la concentration en monoxyde de carbone du courant de recyclage (8) étant inclus en continu dans le calcul de la valeur réelle pour l'excès de monoxyde de carbone dans le courant d'alimentation (1) du réacteur R.

4. Procédé selon l'une quelconque des revendications 1 à 3, **caractérisé en ce que** le débit du courant de gaz d'échappement (6) est mesuré avant la soupape de maintien de pression et la concentration en monoxyde de carbone dans le courant de gaz d'échappement (6) est mesurée après la soupape de maintien de pression.

5. Procédé selon l'une quelconque des revendications 1 à 4, **caractérisé en ce que** le débit du courant de gaz d'échappement (6) et la concentration en monoxyde de carbone dans le courant de gaz d'échappement (6) sont mesurés en continu après la soupape de maintien de pression.

6. Procédé selon l'une quelconque des revendications 1 à 5, **caractérisé en ce que** la séparation du courant de phosgène liquide (5) a lieu en deux étapes par condensation.

7. Procédé selon l'une quelconque des revendications 3 à 6, **caractérisé en ce que** le courant de recyclage (8) présente une concentration en monoxyde de carbone dans la plage allant de 20 à 60 % en poids, de préférence de 30 à 40 % en poids, par rapport au poids total du courant de recyclage (8).

8. Procédé selon l'une quelconque des revendications 3 à 7, **caractérisé en ce que** le courant de recyclage (8) est recyclé avant le réacteur R par le biais d'une buse à jet d'entraînement T, qui est entraînée par le courant d'entrée de monoxyde de carbone (3) ou le courant d'entrée de chlore (2).

9. Procédé selon l'une quelconque des revendications 1 à 8, **caractérisé en ce que** le réacteur R comprend un réacteur principal et un réacteur secondaire pour la transformation de monoxyde de carbone et de chlore en phosgène.

10. Procédé selon la revendication 9, **caractérisé en ce que** jusqu'à 10 % de conversion résiduelle est réalisée dans le réacteur secondaire, et **en ce que** le réacteur secondaire est exploité adiabatiquement ou refroidi.

11. Procédé selon l'une quelconque des revendications 1 à 10, **caractérisé en ce que** deux dispositifs de mesure parallèles sont prévus pour la détermination de la concentration en monoxyde de carbone dans le gaz d'échappement après la soupape de maintien de pression, qui sont exploités en décalage temporel.

12. Procédé selon l'une quelconque des revendications 1 à 11, **caractérisé en ce que** la teneur en chlore du mélange gazeux de produits (4) est mesurée après le réacteur R.
